# EUROPEAN PATENT APPLICATION

(11) **EP 1 997 670 A2**
(43) Date of publication of application: **03.12.2008**
(21) Application number: 08152930.7
(22) Date of filing: 18.03.2008
(51) Int. Cl.: B60N 2/28

(54) **Child seat anchoring device and child seat**

(30) Priority: 29.05.2007 JP 2007142093
(71) Applicant: TAKATA CORPORATION, Minato-ku, Tokyo 106-8510 (JP)
(72) Inventor: Nakagawa, Osamu c/o Takata Corporation, Tokyo 106-8510 (JP); Kawabe, Kenji c/o Takata Corporation, Tokyo 106-8510 (JP)
(74) Representative: Vossius & Partner

(57) **Abstract**

A child seat anchoring device that makes it possible to provide to check whether a tether belt for anchoring a child seat to a vehicle body is sufficiently tensioned, and a child seat having this child seat anchoring device are provided.

When an end 10e of a first tether belt 10 is pulled, the tether belt 10 and a tether belt 20 are tensioned. The tension in the tether belts 10 and 20 is maintained because of a first shaft 60 being pressed against a clamping portion 43a. At this time, a region A of the second shaft 70 faces a see-through portion 54. To release the tension in the tether belts 10 and 20, an operating piece 61 is pressed in, and the first shaft 60 is separated from the clamping portion 43a.

## Description

The present invention relates to a child seat anchoring device for anchoring a child seat to a vehicle body with a tether belt, for example, a child seat anchoring device for anchoring the upper portion of a child seat to an anchorage provided behind a vehicle seat. The present invention also relates to a child seat having this child seat anchoring device.

FIG. 3 of Japanese Unexamined Patent Application Publication No. 2006-306311 and United States Patent Application Publication No. 2005/0006934 disclose that a child seat is placed on a vehicle seat so as to face forward, and the upper portion of the child seat is anchored to an anchorage provided behind the seat with a tether belt.

Japanese Unexamined Patent Application Publication No. 2006-306311 discloses that a tether anchor bracket is provided behind a rear seat of a vehicle, and a tether strap extending rearward from the upper portion of a child seat is inserted into the tether anchor bracket, whereby the upper portion of the child seat is anchored to a vehicle body with a single action (paragraph [0018]).

However, with the structure disclosed in Japanese Unexamined Patent Application Publication No. 2006-306311, whether the tether strap is sufficiently tensioned, i.e., whether the upper portion of the child seat is securely anchored to the anchorage behind it, cannot be checked.

United States Patent Application Publication No. 2005/0006934 discloses that a belt-tension indicator is provided for detecting application of a tension exceeding a predetermined level to a belt.

In United States Patent Application Publication No. 2005/0006934, the belt consists of a first strap constituting half (for example, on a child seat side) of the length and a second strap constituting the other half (for example, on a vehicle component side) of the length. The belt-tension indicator is provided so as to connect these straps together.

In an embodiment shown in FIG. 4 of United States Patent Application Publication No. 2005/0006934, when no tension is applied to the straps or a tension lower than a predetermined level is applied to the straps, a slot in the tension indicator indicates red. When the tension exceeds a predetermined level, the red indication of the slot changes into green. Thus, application of a tension exceeding a predetermined level to the straps can be visually checked.

However, with the belt-tension indicator disclosed in United States Patent Application Publication No. 2005/0006934, whether the tension in the tightened straps is sufficiently kept cannot be known. Further, loosening the straps is troublesome.

An object of the present invention is to provide a child seat anchoring device that solves the above-described problems with the related art and that makes it possible to provide to check whether a tether belt for anchoring a child seat to a vehicle body is sufficiently tensioned. With such a child seat anchoring device, tension can be easily and sufficiently applied and kept, and in addition, the tension can be easily removed. Another object of the present invention is to provide a child seat having this child seat anchoring device.

A child seat anchoring device described in claim 1 is a child seat anchoring device for anchoring a child seat to a vehicle body with a tether belt. The child seat anchoring device includes a first tether belt extending from the child seat, a second tether belt including at an end thereof an attaching portion to be attached to the vehicle body, and a connecting member for connecting the first tether belt and the second tether belt. The connecting member includes a housing, a first shaft around which the first tether belt is wound, and a second shaft around which the second tether belt is wound. The first and second shafts are held substantially parallel with each other by the housing. One of the first and second shafts serves as a tension driven shaft, which can be moved in a direction away from the other shaft by applying a tension to the tether belt. The housing contains an urging member for urging the tension driven shaft toward the other shaft, a tension indicator that overlies the tension driven shaft and moves with the tension driven shaft. The housing has a see-through portion at a position facing a part of the tension indicator. The tension indicator has an indicating portion that faces the see-through portion when the tension driven shaft has moved more than a predetermined distance away from the other shaft. The other of the first and second shafts serves as a locking shaft that can be moved toward the tension driven shaft. The housing contains a pressing member for pressing the locking shaft in a direction away from the tension driven shaft, a clamping portion for clamping the tether belt wound around the locking shaft between the clamping portion and the locking shaft pressed by the pressing member, and an operating piece for moving the locking shaft in a direction away from the clamping portion.

A child seat anchoring device described in claim 2 is the child seat anchoring device according to claim 1,
wherein a portion of the tension indicator facing the see-through portion includes the indicating portion and a different-color portion that is colored differently from the indicating portion.

A child seat described in claim 3 is a child seat including the child seat anchoring device according to claim 1 or 2.

When a child seat is anchored to a vehicle with the child seat anchoring device of the present invention (claim 1), if the tether belt is sufficiently tensioned, the tension driven shaft and the tension indicator, which is provided integrally with the tension driven shaft, sufficiently move in the direction away from the other shaft, whereby the indicating portion of the tension indicator faces the see-through portion of the housing. Accordingly, when the indicating portion can be viewed through the see-through portion, the tether belt is sufficiently tensioned.

In the child seat anchoring device of the present invention, a tension applied to the tether belt can be kept by clamping the tether belt between the locking shaft and the clamping portion.

From this state, if the locking shaft is separated from the clamping portion by operating the operating piece, the tether belt becomes freely movable therebetween. Thus, the tether belt can be loosened.

If the operating piece is released, the locking shaft is pressed toward the clamping portion, and the tether belt is clamped therebetween. Thus, the tether belt is locked.

According to the child seat anchoring device of the claim 2, because the indicating portion and the different-color portion are differently colored, the indicating portion can be clearly viewed through the see-through portion.

An embodiment will now be described with reference to the drawings.
[FIG. 1] FIG. 1 is a perspective view showing that a child seat having a child seat anchoring device according to an embodiment is placed on a rear seat of a car and fixed thereto.
[FIG. 2] FIG. 2 is a perspective view showing that the child seat having the child seat anchoring device according to the embodiment is placed on a rear seat of a car and fixed thereto.
[FIG. 3] FIG. 3 is a perspective view showing that the child seat having the child seat anchoring device according to the embodiment is placed on a rear seat of a car and fixed thereto.
[FIG. 4] FIG. 4 is a perspective view of a connecting member of the child seat anchoring device viewed from above.
[FIG. 5] FIG. 5 is a perspective view of the connecting member viewed from below.
[FIG. 6] FIG. 6 is a perspective view of the connecting member with the operating piece pressed thereinto, viewed from below.
[FIG. 7] FIG. 7 is a perspective view of the connecting member attached with tether belts, viewed from below.
[FIG. 8] FIG. 8 is a sectional view of the connecting member with the tether belts loosened.
[FIG. 9] FIG. 9 is a sectional view of the connecting member with the tether belts tensioned.

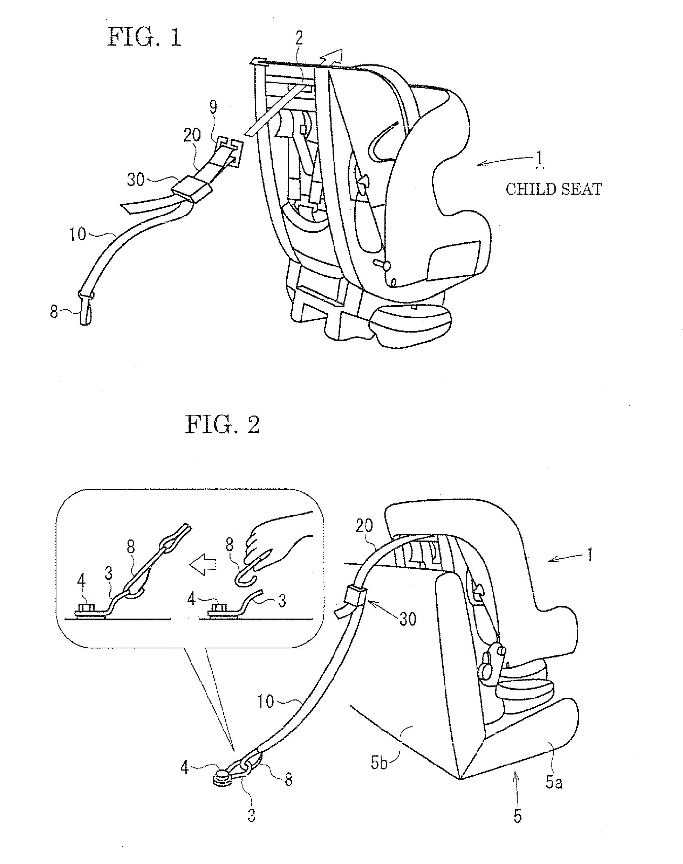

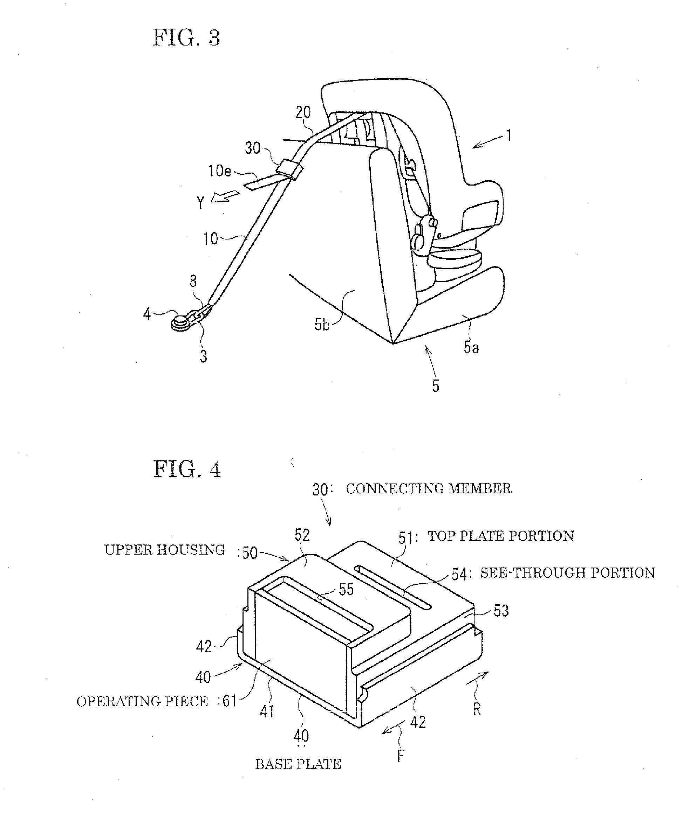

FIGS. 1 to 3 are perspective views showing that a child seat having a child seat anchoring device according to an embodiment is placed on a rear seat of a car and fixed thereto. FIG. 4 is a perspective view of a connecting member of the child seat anchoring device viewed from above.

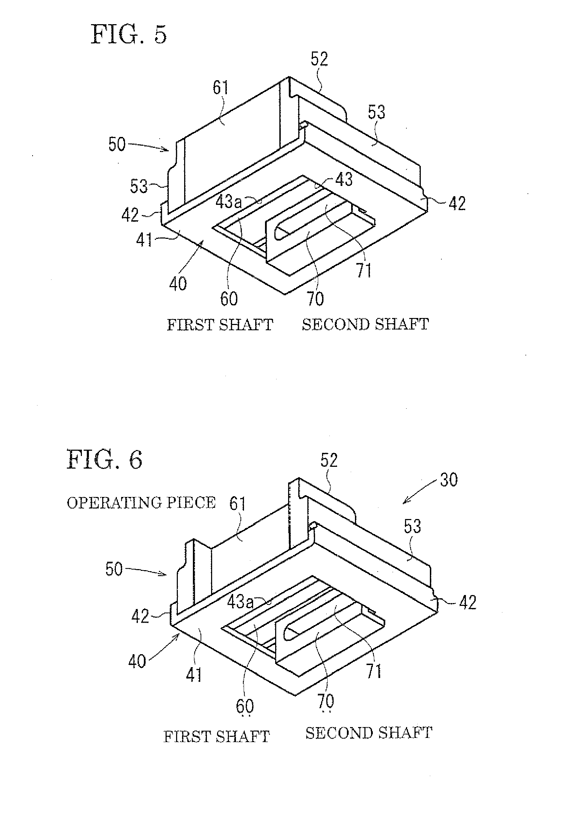

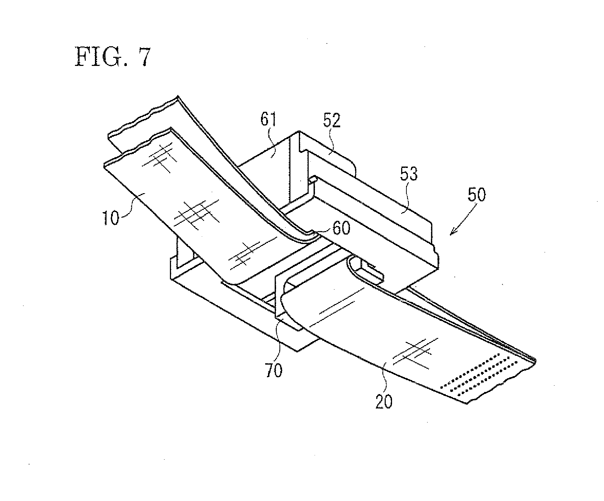

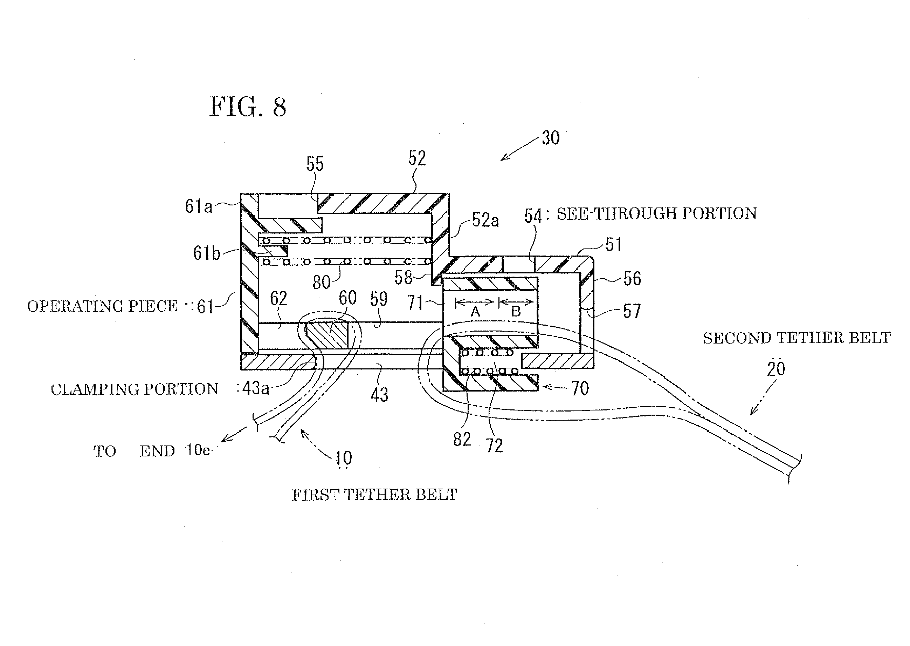

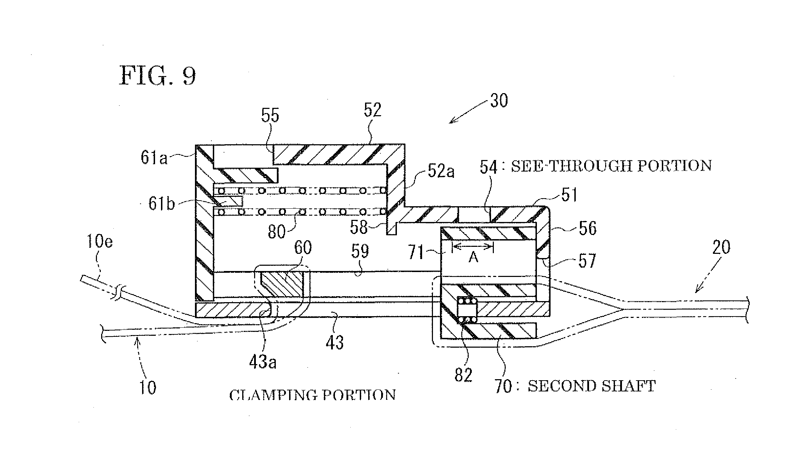

FIG. 5 is a perspective view of the connecting member viewed from below. FIG. 6 is a perspective view of the connecting member with the operating piece pressed thereinto, viewed from below. FIG. 7 is a perspective view of the connecting member attached with tether belts, viewed from below. FIG. 8 is a sectional view of the connecting member with the tether belts loosened. FIG. 9 is a sectional view of the connecting member with the tether belts tensioned.

In the following description, terms such as "top" and "bottom" of the connecting member refer to upward and downward directions in the drawings, and thus, do not limit the installation position of the connecting member.

As shown in FIG. 1, an end of a second tether belt 20 is inserted into and connected to a slot 2 provided at an upper portion of a child seat 1 with a falling-off prevention member 9. The second tether belt 20 is connected to a first tether belt 10 by a connecting member 30.

As shown in FIG. 2, a rear seat 5 includes a seat cushion 5a and a seat back 5b. An anchor loop 3 is attached to a vehicle body member behind the rear seat 5 with an anchor bolt 4. The child seat 1 is placed on the rear seat 5 and is anchored to the rear seat 5 with an ISO-FIX mechanism (not shown) or the like. Then, a hook 8 provided at an end of a first tether belt 10 is hooked to the anchor loop 3.

Next, as shown in FIG. 3, when an end 10e of the first tether belt 10 is pulled in the direction of an arrow Y, the tether belts 10 and 20 are tensioned, whereby the child seat 1 is fixed to the rear seat 5 so as not to lean forward.

Referring to FIGS. 4 to 9, the structure of the connecting member 30 will be described.

The connecting member 30 includes a box-shaped housing consisting of a base plate 40 made of metal and an upper housing 50 made of synthetic resin.

The base plate 40 consists of a U-shaped metallic member, which includes a base plate portion 41 and sidewall portions 42 extending upward from both the left and right edges of the base plate portion 41. The base plate portion 41 has a rectangular opening 43. The anterior edge portion of the opening 43 and a first shaft 60, which will be described below, make a clamping portion 43a for clamping the first tether belt 10 therebetween.

The upper housing 50 consists of a substantially U-shaped member, which includes a top plate portion 51 parallel with the base plate portion 41, a protruding portion 52 formed so as to protrude upward from the top plate portion 51, and sidewall portions 53 extending downward from both the left and right edges of the top plate portion 51. The base plate 40 and the upper housing 50 are connected together by inserting the upper ends of the sidewall portions 42 of the base plate 40 into slots (not shown) provided in the sidewall portions 53.

The top plate portion 51 has a see-through portion 54 in the shape of an elongated aperture extending in the direction connecting sidewalls 53 and 53. The see-through portion may be formed of a transparent member instead of the elongated aperture.

The protruding portion 52 is provided with a notch 55 cut from the anterior edge thereof.

As shown in FIGS. 8 and 9, a stopper portion 58 for receiving a second shaft 70 extends downwardly from a back wall 52a of the protruding portion 52.

A back wall 56 of the upper housing 50 has a through-opening 57 for the second tether belt 20.

The first shaft 60 and the second shaft 70 are disposed parallel with each other in the housing consisting of the base plate 40 and the upper housing 50, so that they can be brought close to or moved away from each other.

In this embodiment, the first shaft 60 serves as the locking shaft, and the second shaft 70 serves as the tension driven shaft. The first shaft 60 is positioned near the anterior edge of the opening 43. Both ends of the first shaft 60 are fitted into guide grooves 59 provided in the inner surfaces of the sidewall portions 52 of the upper housing 50. These guide grooves 59 extend parallel with the base plate portion 41, whereby the first shaft 60 can slide in the front-rear direction, i.e., in the direction in which the sidewall portions 42 and 52 extend.

An operating piece 61, which serves as an operating portion, is provided integrally with the first shaft 60. The operating piece 61 is formed integrally with the shaft 60 through a bridging portion 62 (FIGS. 8 and 9). The operating piece 61 is disposed along the anterior edge of the base plate 40.

When the first shaft 60 slides backward, i.e., moves in the direction of an arrow R shown in FIG. 4, the operating piece 61 moves backward between the sidewall portions 53 and 53 of the upper housing 50 as shown in FIG. 6. At this time, the upper portion 61a of the operating piece 61 enters the notch 55.

A coil spring 80 is disposed between the operating piece 61 and the back wall 52a of the protruding portion 52 (FIG. 8), whereby the operating piece 61 and the first shaft 60 are always urged in the direction of an arrow F (FIG. 4).

When the first shaft 60 is pressed against the anterior edge of the guide grooves 59, the operating piece 61 becomes flush with the anterior edges of the base plate 40 and the upper housing 50.

The second shaft 70 is disposed near the posterior end of the opening 43. The second shaft 70 has a belt insertion aperture 71 for letting the second tether belt 70 extend therethrough. The second shaft 70 has a recess 72 which is large enough to house a portion of the base plate portion 41 of the base plate 40, where is a rear of the opening 43, therein. A coil spring 82 is disposed in the recess 72. The coil spring 82 receives a reaction force exerted from the posterior end portion of the opening 43, urges the second shaft 70 in the direction of the arrow F (FIG. 4), and presses the second shaft 70 against the stopper portion 58 of the upper housing 50.

The top face of the second shaft 70 faces the see-through portion 54 of the upper housing 50. In this embodiment, the top face portion of the second shaft 70 serves as a tension indicator.

In the state of FIG. 8, where the second shaft 70 abuts against the stopper portion 58, a region B, which is in the posterior portion of the top face of the second shaft 70, faces the see-through portion 54.

In the state of FIG. 9, where the second shaft 70 abuts against the back wall 56 of the upper housing 50, a region A, which is in the anterior portion of the top face of the second shaft 70, faces the see-through portion 54. The region B is colored red, and the region A is colored other than red. Examples of colors preferable for the region A include green, blue, white, and ivory yellow, which are significantly different from red.

A method of using the child seat anchoring device having above-described structure will now be described.

As shown in FIGS. 8 and 9, the first tether belt 10 is wound around the first shaft 60, and the second tether belt 20 is wound around the second shaft 70.

When the tether belts 10 and 20 are slack, as shown in FIG. 8, the second shaft 70 abuts against the stopper portion 58, i.e., the second shaft 70 is positioned at the limit of forward movement. At this time, the red of the region B can be viewed through the see-through portion 54. At this time, the anterior edge of the first shaft 60 overlies the clamping portion 43a.

When the end 10e of the first tether belt 10 is pulled, the first shaft 60 slightly moves rightward in FIG. 8 because of the tension applied to the first tether belt 10. Then, the first tether belt 10 moves toward the end 10e through the gap between the clamping portion 43a and the first shaft 60. When the pulling of the end 10e is stopped, the first shaft 60 is pressed against the clamping portion 43a by the urging force of the coil spring 80, whereby the first tether belt 10 is clamped between the clamping portion 43a and the first shaft 60. At this time, the first shaft 60 is pressed against the clamping portion 43a, that is, the first shaft 60 is pressed leftward as viewed in FIG. 9, because of the tension of the first tether belt 10. Thus, the first tether belt 10 is strongly clamped between the clamping portion 43a and the first shaft 60, whereby the first tether belt 10 is prevented from loosening.

When the end 10e of the first tether belt 10 is pulled and tensioned, the second tether belt 20 is also tensioned. The second shaft 70 moves rightward from the state in FIG. 8 because of the tension in the second tether belt 20.

The second shaft 70 moves backward until it abuts against the back wall 56 of the upper housing 50, which is shown in FIG. 9. In the state shown in FIG. 9, the region A can be viewed through the see-through portion 54.

Accordingly, whether the tether belts 10 and 20 are sufficiently tensioned can be visually checked. In other words, by pulling the end 10e of the first tether belt 10 until the color, which can be viewed through the see-through portion 54, is a color of the region A other than red (for example, green, or white), the tether belts 10 and 20 can be sufficiently tensioned, whereby the child seat 1 can be securely fixed to the seat 5. The tension in the tether belts 10 and 20 is maintained because of the first shaft 60 being strongly pressed against the clamping portion 43a by the tension.

To release the tension in the tether belts 10 and 20, such as when removing the child seat 1, the operating piece 61 is pressed. This separates the first shaft 60 from the clamping portion 43a and allows the first tether belt 10 to freely move between the clamping portion 43a and the first shaft 60. Thus, by pulling the connecting member 30 rearward or upward while pressing the operating piece 61, the first tether belt 10 can be withdrawn, whereby the tension can be released.

The above-described embodiment is an example of the present invention. The present invention may be embodied in a way other than as shown in the drawings. For example, in the above-described embodiment, the first tether belt 10 and the first shaft 60 are provided on the child seat side. However, the second tether belt 20 and the second shaft 70 may be provided on the child seat side.

## Claims

1. A child seat anchoring device for anchoring a child seat to a vehicle body with a tether belt, the child seat anchoring device comprising:
a first tether belt extending from the child seat;
a second tether belt including at an end thereof an attaching portion to be attached to the vehicle body; and
a connecting member for connecting the first tether belt and the second tether belt, the connecting member including a housing, a first shaft around which the first tether belt is wound, and a second shaft around which the second tether belt is wound, the first and second shafts being held substantially parallel with each other by the housing,
wherein one of the first and second shafts serves as a tension driven shaft, which can be moved in a direction away from the other shaft by applying a tension to the tether belt,
wherein the housing contains an urging member for urging the tension driven shaft toward the other shaft, a tension indicator that overlies the tension driven shaft and moves with the tension driven shaft,
wherein the housing has a see-through portion at a position facing a part of the tension indicator, the tension indicator having an indicating portion that faces the see-through portion when the tension driven shaft has moved more than a predetermined distance away from the other shaft,
wherein the other of the first and second shafts serves as a locking shaft that can be moved toward the tension driven shaft, and
wherein the housing contains a pressing member for pressing the locking shaft in a direction away from the tension driven shaft, a clamping portion for clamping the tether belt wound around the locking shaft between the clamping portion and the locking shaft pressed by the pressing member, and an operating piece for moving the locking shaft in a direction away from the clamping portion.

2. The child seat anchoring device according to claim 1,
wherein a portion of the tension indicator facing the see-through portion comprises the indicating portion and a different-color portion that is colored differently from the indicating portion.

3. A child seat comprising the child seat anchoring device according to claim 1 or 2.
